# EUROPÄISCHE PATENTANMELDUNG

(11) **EP 1 507 395 A1**
(43) Veröffentlichungstag der Anmeldung: **16.02.2005**
(21) Anmeldenummer: 03018497.2
(22) Anmeldetag: 14.08.2003
(51) Int. Cl.: H04M 7/00, H04M 3/54

(54) **Verfahren zur Einrichtung einer Anrufumleitung für eine SIP-Telefonnummer eines SIP Clients in einem gemischten leitungsgebundenen und paketvermittelten Netz**

(71) Anmelder: SIEMENS AKTIENGESELLSCHAFT, 80333 München (DE)
(72) Erfinder: Baumann, Thomas, 83607 Holzkirchen (DE)

(57) **Zusammenfassung**

Bei Eingabe einer bestimmten Nummernfolge und der SIP-Telefonnummer an einem Telefon eines beliebigen Teilnehmeranschlusses einer dem Kommunikationsnetz zugeordneten Vermittlungseinrichtung wird die Nummerfolge derart ausgewertet, dass von Vermittlungseinrichtung eine erste Nachricht mit der Telefonnummer des Teilnehmeranschlusses und der eingegebenen SIP-Telefonnummer an einen Media Gateway Controller des Kommunikationsnetzes übermittelt wird. Dieser sendet eine zweite Nachricht mit der übermittelten Telefonnummer des Teilnehmeranschlusses und der SIP-Telefonnummer an einen SIP Registrar, der in einer ihm zugeordneten Location Service Datenbank die Telefonnummer als neue aktuelle Telefonnummer für Anrufe an die SIP-Telefonnummer speichert. Anrufe für die SIP-Telefonnummer werden nun an die aktuelle Telefonnummer aus der Location Service Datenbank umgeleitet.

## Beschreibung

Verfahren zur Einrichtung einer Anrufumleitung für eine SIP-Telefonnummer eines SIP Clients in einem Kommunikationsnetz

In modernen Kommunikationsnetzen wird eine Dekomposition respektive Trennung von Verbindungsaufbau und Medium- bzw. Beareraufbau durch den Einsatz von sogenannten Media Gateway Controllern, kurz MGC, und Media Gateways, kurz MG, durchgeführt. Dadurch können Internet Protokoll Netze, kurz IP Netze, als preiswerte Bearertechnologie verwendet werden.

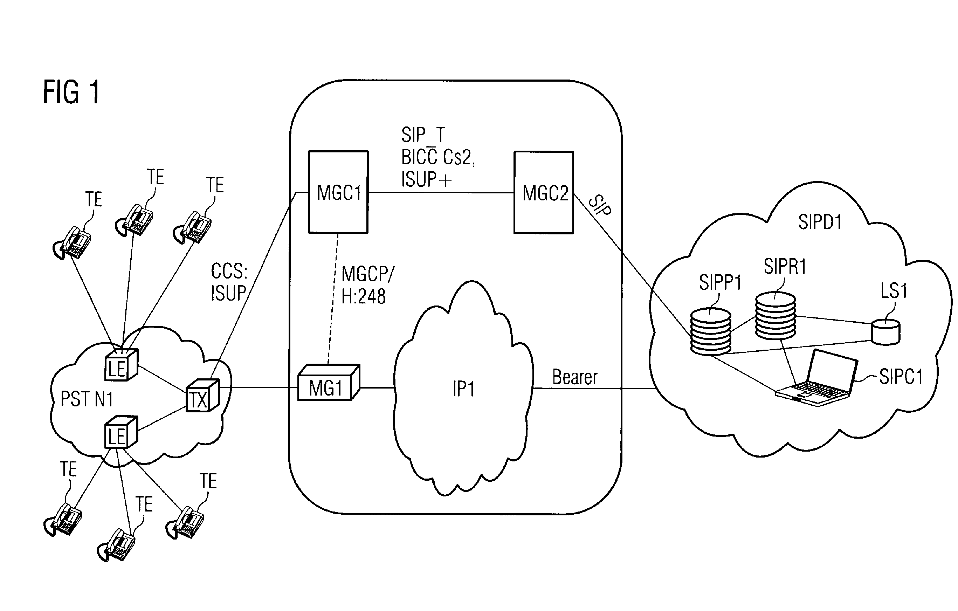

Figur 1 zeigt beispielhaft eine Anordnung zur Anwendung dieser Technik. Dabei zeigt Figur 1 ein Public Switched Telephone Network PSTN1, das mehrere Ortsvermittlungsstellen LE enthält, an denen jeweils Telefone TE angeschlossen sind. Die Ortsvermittlungsstellen sind mit einer Endvermittlungsstelle TX verbunden, die wiederum jeweils mit einem ersten Media Gateway Controller MGC1 und einem Media Gateway MG1 verbunden ist. Diese stehen untereinander durch eine erste Verbindung in Kontakt, über die zur Kommunikation das Protokoll MGCP oder H.248 verwendet wird. Der erste Media Gateway Controller MGC1 ist über eine zweite Verbindung mit einem zweiten Media Gateway Controller MGC2 verbunden, über die die Controller durch eines der Protokolle SIP_T, BICC CS2 oder ISUP+ kommunizieren. Der zweite Media Gateway Controller MGC2 ist durch eine weitere Verbindung mit einer SIP Domain SIPD1 verbunden. Diese besteht aus einem SIP Proxy SIPP1, einen SIP Registrar SIPR1 und einer Location Service Datenbank LS1, die untereinander verbunden sind. Am SIP Proxy SIPP1 ist ein SIP Client SIPC1 angeschlossen, der ebenfalls Verbindung zum SIP Registrar SIPR1 hat. Das Media Gateway MG1 ist über ein Internet Protokoll Netz IP1 ebenfalls mit der SIP Domain SIPD1 verbunden.

Als Kommunikationsprotokoll für IP-Endgeräte wird zunehmend das Session Initiation Protocol, kurz SIP, gemäß RFC2543/RFC3261 verwendet. Zwischen Media Gateway Controllern werden die Protokolle BICC CS2, ISUP+ oder SIP_T verwendet.

Das SIP Protokoll basiert auf einer Client Server Architektur. Diese unterstützt die Mobilität von SIP Teilnehmern bzw. Subscribern. Ein SIP Client kann sich an einem beliebigen Ort befinden und sich von dort aus bei einem sogenannten "SIP Registrar" registrieren. Der "SIP Registrar" speichert die Registrierungs-Informationen des SIP Subscribers in einer sogenannten Location Service Datenbank. Durch diese Registrierung ist es möglich, dass der SIP Client, egal wo er sich gerade befindet, über seine "globale" SIP-Adresse bzw. SIP-Telefonnummer erreicht werden kann. Dies wird als sogenanntes SIP Mobility Feature bezeichnet.

Mittlerweile existieren Übergänge vom SIP Netz in das öffentliche Telefonnetz respektive Public Switched Telephone Network, kurz PSTN Netz.

Im "klassischen" öffentlichen Telefonnetz gibt es die Möglichkeit der Anrufweiterleitung zu einem anderen Teilnehmeranschluss des öffentlichen Telefonnetzes. Dabei wird am Teilnehmeranschluss die Anrufweiterleitung zu einem anderen Teilnehmeranschluss konfiguriert. Bei einem Ortswechsel muss der den Anruf weiterleitende Teilnehmeranschluss neu administriert werden. Eine Konfiguration eines fremden Anschlusses ist nicht vorgesehen.

Aufgabe der vorliegenden Erfindung ist, eine Anrufweiterleitung zwischen SIP- und PSTN-Netzen zu ermöglichen und einzurichten.

Diese Aufgabe wird durch die Merkmale des Verfahrens gemäß Anspruch 1 gelöst.

Der Vorteil der Erfindung besteht darin, dass durch das erfindungsgemäße Verfahren, das Interworking zwischen PSTN- und SIP-Netz und die Verwendung des SIP Mobility Feature ein PSTN-Teilnehmer bzw. Subscriber mobil wird. Dieser kann sich an beliebigen Orten aufhalten und ist im Kommunikationsnetz immer unter ein- und derselben Kennung, Telefonnummer bzw. Rufnummer erreichbar. Diese Telefonnummer könnte man sogar als lebenslange Telefonnummer respektive "lifetime telephone number" vergeben.

Ein weiterer Vorteil besteht darin, dass man den PSTN-Teilnehmer bei einem Ortswechsel nicht, wie bisher üblich, neu administrieren muss. Ähnlich wie ein Mobilfunk Endgerät meldet man sich einfach vom neuen Ort aus an und ist unter der gewohnten Telefonnummer erreichbar. Die beschriebene Lösung hat gegenüber einem Mobilfunk Endgerät den Vorteil, dass man dieses nicht dabei haben muss, sondern sich mit einem beliebigen Telephonie-Endgerät, wie ISDN Telefon, analoges Telefon, PC, etc. an einem beliebigen Ort, wie im Hotel, bei Freunden, im Urlaub, usw. anmelden kann.

Die vorliegenden Erfindung hat die weiteren Vorteile, dass:
- sie einfach ist, weil sie die bestehenden SIP Mobility Features ausnutzt,
- sie billig ist, weil im wesentlichen nur der Media Gateway Controller an der Netzschnittstelle zum SIP-Netz angepasst werden muss,
- sie universell anwendbar ist, weil ein Teilnehmer mit einer SIP-Telefonnummer sich von jedem beliebigen PSTN Telefon aus registrieren lassen kann und an diesem erreichbar ist, unabhängig von der jeweils verwendeten Anschlusstechnik.

Es ist ein Interworking mit jeder Lösung möglich, welche IP als Bearertechnologie benutzt, z.B.:
- einem VoIP Trunking Subscriber,
- einem VoDSL/VoCable Subscriber, der über ein IAD/CPG/MTA angeschlossen ist,
- einem Subscriber, der über ein Access Gateway, wie hiA7600, angeschlossen ist,
- einen H.323 Subscriber,
- einem SIP Client.

Vorteilhafte Weiterbildungen der Erfindung sind in den Unteransprüchen angegeben.

In einer Weiterbildung der Erfindung wird eine Authentifizierung des Teilnehmers durchgeführt. Dies hat den besonderen Vorteil, dass eine unberechtigte Einrichtung einer Anrufweiterleitung vermieden wird.

Ein Ausführungsbeispiel der Erfindung wird im folgenden anhand der Zeichnungen näher erläutert.

Dabei zeigt:
Figur 1 eine Anordnung einer ersten Kombination aus PSTN und SIP Netz.
Figur 2 eine Anordnung aus PSTN und SIP Netz zur Erläuterung des erfindungsgemäßen Verfahrens.
Figur 3 eine Anordnung gemäß Figur 2 mit einem ersten Verfahrenszustand.
Figur 4 eine Anordnung gemäß Figur 2 mit einem zweiten Verfahrenszustand.
Figur 5 eine Anordnung gemäß Figur 2 mit einem dritten Verfahrenszustand.

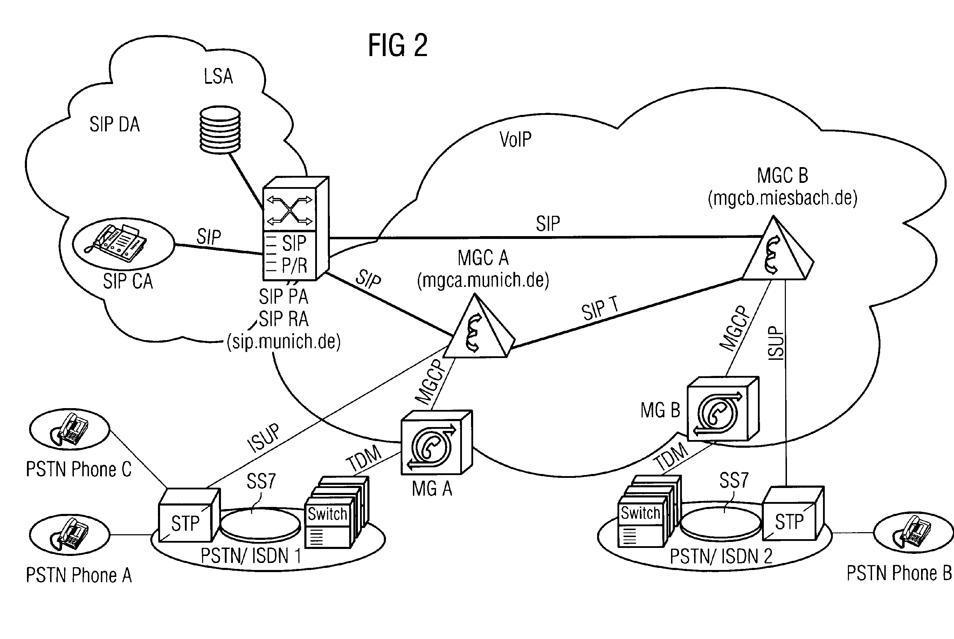

Figur 1 zeigt eine bereits in der Einleitung beschriebene Anordnung einer Kombination aus PSTN- und SIP-Netz. Figur 2 zeigt ein Voice over IP Netzwerk VoIP, mit zwei Media Gateway Controllern MGC A, mit der zugeordneten Domain mgca.munich.de, und MGC B, mit der zugeordneten Domain mgcb.miesbach.de. Diese beiden Media Gateway Controller kommunizieren mittels einer IP Verbindung durch das SIP_T Protokoll miteinander. Der Media Gateway Controller MGC A steuert ferner mittels einer IP Verbindung und durch das Media Gateway Control Protocol, kurz MGCP, ein Media Gateway MG A. Dieses Media Gateway MG A ist über eine Time Division Multiplex Verbindung, kurz TDM, mit einer ersten "klassischen" PSTN Vermittlungseinrichtung PSTN/ISDN1 verbunden. Diese Vermittlungseinrichtung PSTN/ISDN1 hat wiederum eine Verbindung über das Signaling System 7, kurz SS7, bzw. ISDN User Part Protokoll, kurz ISUP Protokoll, mit dem Media Gateway Controller MGC A. An der ersten Vermittlungseinrichtung PSTN/ISDN1 sind beispielhaft zwei PSTN Telefone PSTN Phone A und PSTN Phone C angeschlossen.

Am Media Gateway Controller MGC B ist, analog zum Media Gateway Controller MGC A, ein Media Gateway MG B angeschlossen, das über eine IP Verbindung und das Media Gateway Control Protocol, kurz MGCP, gesteuert wird. Das Media Gateway MG B ist über eine TDM Verbindung mit einer zweiten "klassischen" Vermittlungseinrichtung PSTN/ISDN2 verbunden. Diese ist wiederum über eine SS7 bzw. ISUP Protokoll Verbindung mit dem Media Gateway Controller MGC B verbunden. An der zweiten Vermittlungseinrichtung PSTN/ISDN2 ist beispielhaft ein PSTN Telefon PSTN Phone B angeschlossen.

Die Media Gateway Controller MGC A und MGC B haben jeweils eine IP Verbindung, über der sie mittels des SIP Protokolls mit einem SIP Proxy SIP PA und einen SIP Registrar SIP RA kommunizieren. Der SIP Proxy SIP PA und der SIP Registrar SIP RA befinden sich in diesem Fall auf einem Server, können aber auch auf getrennten Servern arbeiten. Der SIP Proxy SIP PA und der SIP Registrar SIP RA haben jeweils eine Verbindung mit einer Location Service Datenbank LSA und beispielhaft einem SIP Client SIP CA. Der SIP Proxy SIP PA, der SIP Registrar SIP RA, die Location Service Datenbank LSA und der SIP Client SIP CA befinden sich in einer SIP Area SIP DA mit der Domain sip.munich.de.

Ein erster Teilnehmer sei über den SIP Client SIP CA mit der SIP-Telefonnummer bzw. SIP-Rufnummer:
**+49199462518** bzw. **0049199462518** erreichbar.
Zudem ist er in der Domain "sip.munich.de" beim SIP Registrar SIP RA registriert, so dass sich die SIP-Nummer:
**sip:+49199462518@sip.munich.de** ergibt.

Außerdem sei der erste Teilnehmer über das PSTN Telefon PSTN Phone A mit der Rufnummer:
**+49 89 723467** erreichbar.
Diese Rufnummer sei zudem in der Domain des Media Gateway Controllers MGC A, mgca.munich.de, registriert. Daraus ergibt sich eine SIP-Nummer:
**sip:+4989723467@mgca.munich.de**

Befindet sich der erste Teilnehmer nun am PSTN Telefon PSTN Phone B mit der Telefonnummer bzw. Teilnehmeranschlusskennung:
**+498024773377**
und möchte Anrufe zu seinem SIP-Client SIP CA am PSTN Telefon PSTN Phone B entgegennehmen, so wählt der erste Teilnehmer vom PSTN Telefon PSTN Phone B eine bestimmte Nummerfolge bzw. Kennung, wie #*21, und die SIP-Telefonnummer seines SIP-Clients, also:
**#*21 0049199462518.**

Die zweite PSTN Vermittlungseinrichtung PSTN/ISDN2 erkennt die bestimmte Nummerfolge bzw. Kennung, wertet diese und die SIP-Rufnummer aus und sendet daraufhin eine ISUP Nachricht, wie ISUP:IAM, mit einem speziellen Registrierungscode, der SIP-Telefonnummer und der Telefonnummer des Teilnehmeranschlusses an den Media Gateway Controller MGC B. Der Media Gateway Controller MGC B wertet diese Nachricht aus und sendet daraufhin eine SIP:REGISTER Nachricht mit der SIP-Telefonnummer, der SIP Domain, der Telefonnummer des PSTN Anschlusses und seiner eigenen SIP Domain an den SIP Registrar SIP RA. D.h.
**From: sip: +49199462518@sip.munich.de**
**Contact: <sip:+498024773377@mgcb.miesbach.de>**

Der SIP Registrar SIP RA speichert die PSTN Telefonnummer und die SIP-Domain des Media Gateway Controller MGC B als neue Kontaktadresse für die angegebene SIP-Telefonnummer in der Location Service Datenbank und sendet nach erfolgreicher Speicherung eine SIP:200 OK Nachricht an den Media Gateway Controller MGC B.

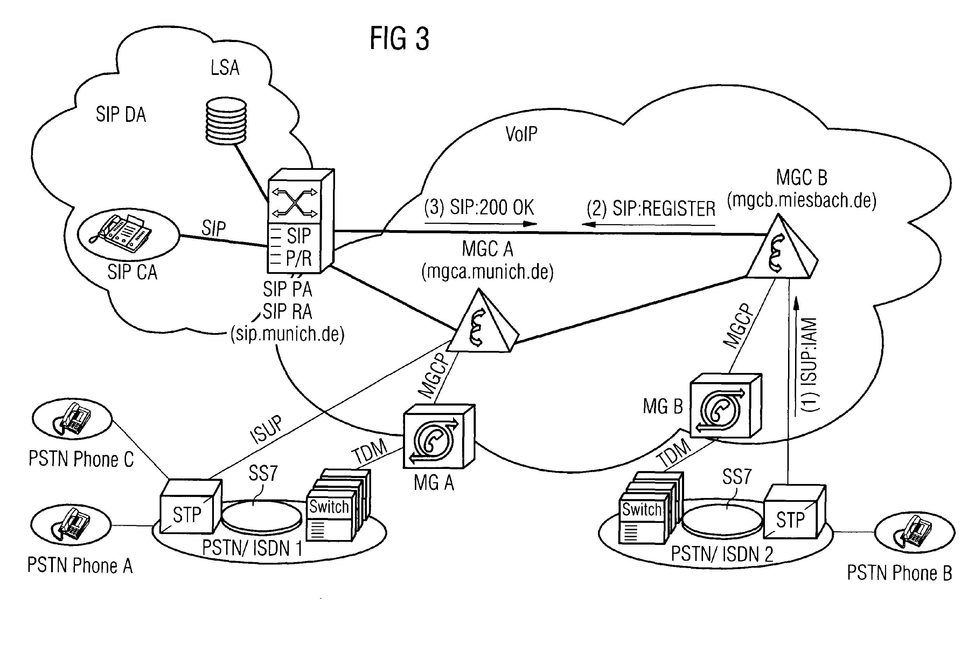

Dieser Vorgang ist in Figur 3 schematisch dargestellt. Figur 3 zeigt eine Anordnung gemäß Figur 2, mit der Maßgabe, dass eine erste Nachricht (1) ISUP:IAM von der zweiten Vermittlungseinrichtung PSTN/ISDN2 an den Media Gateway Controller MGC B, eine zweite Nachricht (2) SIP:REGISTER vom Media Gateway Controller MGC B an den SIP Registrar SIP RA und eine dritte Nachricht (3) SIP:200 OK vom SIP Registrar SIP RA an den Media Gateway Controller MGC B gesendet wird.

Möchte nun ein zweiter Teilnehmer von einem SIP Client aus den ersten Teilnehmer kontaktieren und wählt die SIP-Telefonnummer des ersten Teilnehmers, so wird vom SIP Client des zweiten Teilnehmers eine SIP:INVITE Nachricht an den SIP Proxy SIP PA gesendet. Wie:
**INVITE sip:+49199462518@sip.munich.de SIP/2.0**
**From: client02@sip.munich.de; tag=1c24841**
**To: sip:+49199462518@sip.munich.de**
····

Der SIP Proxy SIP PA durchsucht nun die Location Service Datenbank LSA, um die aktuelle Kontaktadresse bzw. Telefonnummer der gewünschten SIP-Telefonnummer zu ermitteln. Nach Ermittlung der aktuellen Telefonnummer
**498024773377@mgcb.miesbach.de**
verändert der SIP Proxy SIP PA die SIP:INVITE Nachricht, indem er die neue Telefonnummer einträgt, zu:
**INVITE sip:+498024773377@mgcb .miesbach.de SIP/2.0**
**From: client02@sip.munich.de; tag=1c24841**
**To: sip:+49199462518@sip.munich.de**
. . . .
und sendet diese zum Media Gateway Controller MGC B.
Der Media Gateway Controller MGC B wertet diese Nachricht aus, erkennt die PSTN Telefonnummer in der SIP:INVITE Nachricht und sendet daraufhin eine ISUP Nachricht an die zweite Vermittlungseinrichtung PSTN/ISDN2. Diese wertet die ISUP Nachricht aus und baut einen Ruf zum PSTN Telefon PSTN Phone B auf.

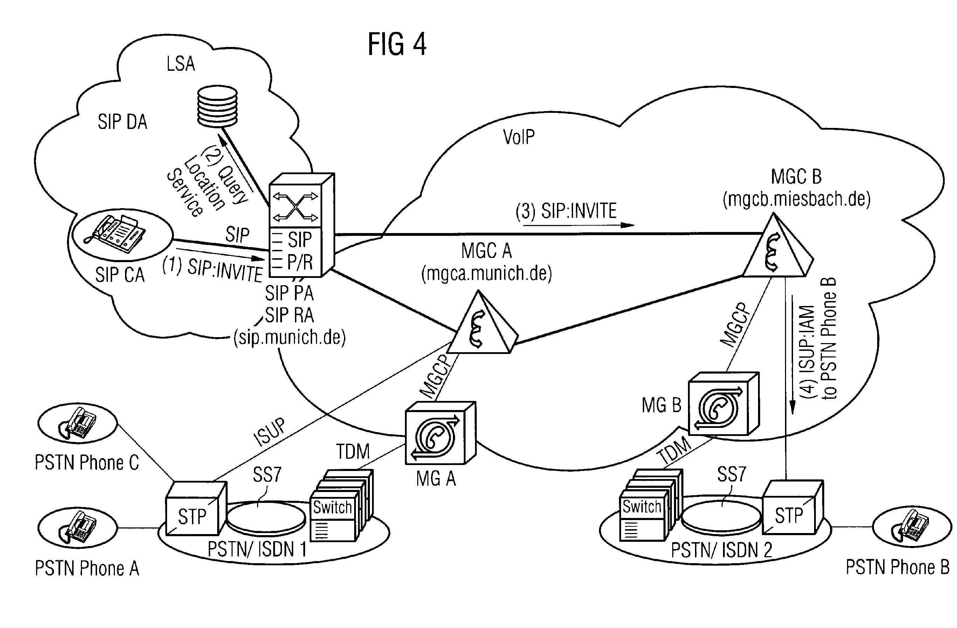

Dieser Ablauf ist schematisch in Figur 4 dargestellt. Figur 4 zeigt eine Anordnung gemäß Figur 2, mit der Maßgabe, dass eine Nachricht (1) SIP:INVITE vom SIP Client SIP CA an den SIP Proxy SIP PA gesendet wird. Diese wird dort ausgewertet und vom SIP Proxy SIP PA eine Anfrage (2) an die Location Service Datenbank gesendet. Nach erfolgreicher Beantwortung der Anfrage wird eine Nachricht (3) SIP:INVITE vom SIP Proxy SIP PA an den Media Gateway Controller MGC B gesendet, der diese Nachricht auswertet und eine Nachricht (4) ISUP:IAM an die zweite Vermittlungseinrichtung PSTN/ISDN2 sendet, die daraufhin einen Ruf an das / am PSTN Telefon PSTN Phone B absetzt /auslöst.

Für den Fall, dass der erste Teilnehmer durch einen dritten Teilnehmer aus dem PSTN Netz am PSTN Telefon PSTN Phone C mit der Rufnummer:
**+498972224996**
gerufen wird, die sich in der Domain:
**mgca.munich.de**
befindet, ergibt sich der nachfolgend beschriebene Ablauf.

Der dritte Teilnehmer ruft vom PSTN Telefon PSTN Phone C die SIP-Telefonnummer des ersten Teilnehmers. Daraufhin sendet die erste Vermittlungseinrichtung PSTN/ISDN1 eine ISUP Nachricht mit der gewünschten Telefonnummer und der Telefonnummer des rufenden Teilnehmeranschlusses, also vom PSTN Telefon PSTN Phone C, an den Media Gateway Controller MGC A. Der Media Gateway Controller MGC A wertet diese Nachricht aus und sendet eine SIP:INVITE Nachricht mit der gerufenen und der rufenden Telefonnummer an den SIP Proxy SIP PA. Die Domain der gewünschten SIP-Rufnummer wird dabei durch den Media Gateway Controller automatisch ergänzt. Sie kann fest im Media Gateway Controller bzw. in der Routing Datenbank des Media Gateway Controller administriert sein. Wie:
**INVITE sip:+49199462518@sip.munich.de SIP/2.0**
**From: +498972224996@mgca.munich.de; tag=23d21**
**To: sip:+49199462518@sip.munich.de**
. . . .
Der SIP Proxy SIP PA wertet diese Nachricht aus und sendet eine Anfrage an die Location Service Datenbank LSA, um zu der gewünschten SIP-Telefonnumer die aktuelle Adresse bzw. Rufnummer zu erhalten. Nach erfolgreicher Ermittlung der gewünschten Rufnummer verändert der SIP Proxy SIP PA die SIP:INVITE Nachricht, indem er die aktuelle Rufnummer des gewünschten SIP-Teilnehmers einträgt, und sendet sie zu der Domain der ermittelten Rufnummer bzw. Telefonnummer, also an den Media Gateway Controller MGC B. Bspw.:
**INVITE sip:+498024773377@mgcb.miesbach.de SIP/2.0**
**From: +498972224996@mgca.munich.de; tag=23d21**
**To: sip:+49199462518@sip.munich.de**
. . . .
Der Media Gateway Controller MGC B wertet die empfangene Nachricht aus, erkennt die PSTN Telefonnummer seiner Domain und sendet eine ISUP Nachricht an die zweite Vermittlungseinrichtung PSTN/ISDN2. Diese wertet die empfangene ISUP Nachricht aus und baut einen Ruf zum PSTN Telefon PSTN Phone B auf.

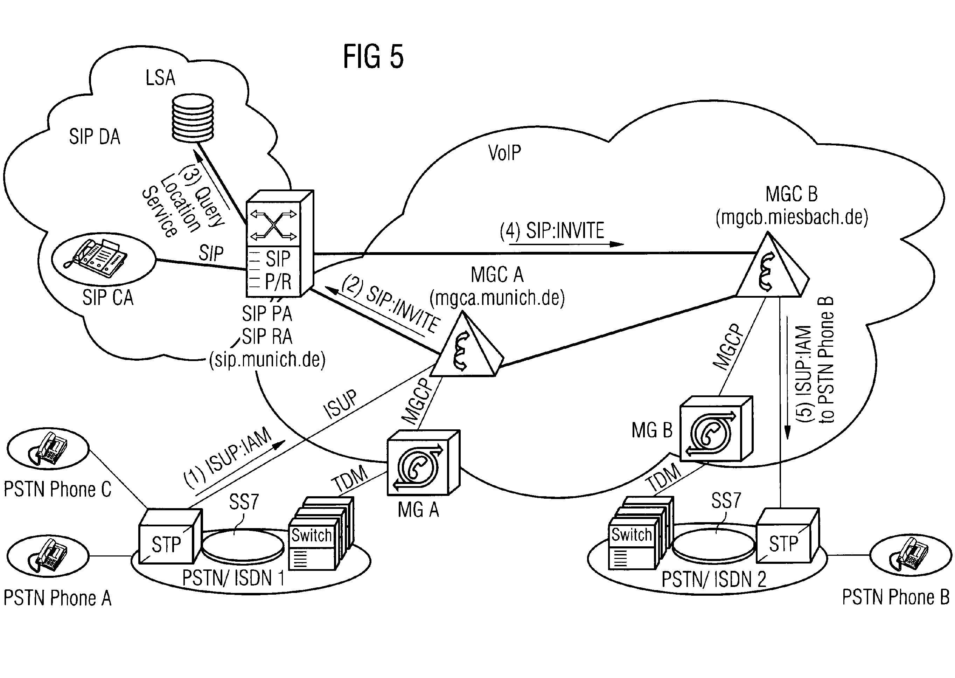

Dieser Ablauf ist schematisch in Figur 5 dargestellt. Figur 5 zeigt eine Anordnung gemäß Figur 2, mit der Maßgabe, dass eine Nachricht (1) ISUP:IAM von der ersten Vermittlungseinrichtung PSTN/ISDN1 an den Media Gateway Controller MGC A gesendet wird, der diese Nachricht auswertet und eine Nachricht (2) SIP:INVITE an den SIP Proxy SIP PA sendet. Dieser erzeugt eine Anfrage (3) Query Location Service, die zur Location Service Datenbank LSA gesendet wird. Nach erfolgreicher Abfrage und Auswertung der ermittelten Antwort wird durch den SIP Proxy SIP PA eine Nachricht (4) SIP:INVITE an den Media Gateway Controller MGC B gesendet. Dieser wertet die empfangene Nachricht aus und erzeugt eine Nachricht (5) ISUP:IAM, die an die zweite Vermittlungseinrichtung PSTN/ISDN2 gesendet wird. Diese baut daraufhin einen Ruf zum PSTN Telefon PSTN Phone B auf.

In einer Ausgestaltung der Erfindung wird nach Eingabe respektive Wahl der bestimmten Nummernfolge/Kennung und der SIP-Telefonnummer und dessen Übermittlung zur Telefon-Vermittlungseinrichtung eine Authentifizierung des Teilnehmers durchgeführt. Dies erfolgt beispielsweise dadurch, das ein für die SIP-Telefonnummer abgelegtes Passwort abgefragt wird bzw. eine Persönliche Identifikationsnummer, kurz PIN, und/oder eine Transaktionsnummer, kurz TAN, eingegeben werden muss. Die Abfrage kann dadurch erfolgen, dass analog dem vorher beschriebenen eine Anfrage von der Vermittlungseinrichtung an den Media Gateway Controller und an den SIP Proxy Server erfolgt. Von diesem oder vom Media Gateway Controller kann eine Authentifizierungsanfrage an einen Server, wie einen (SIP) Authentifizierungsserver, gestellt werden.

Ein PSTN-Subscriber hat eine "globale" SIP-Rufnummer unter der er, egal wo er sich befindet, überall erreichbar ist. Mit dieser SIP-Rufnummer und der Rufnummer des "lokalen" PSTN-Anschlusses registriert er sich beim SIP-Registrar.

Ruft man nun von einem SIP-Client oder PSTN-Anschluss die "globale" SIP-Rufnummer an, so wird das Gespräch über das SIP-Netz zur derzeit aktuellen "lokalen" PSTN-Rufnummer weitergeleitet. Der PSTN-Subscriber kann über die "globale" SIP-Rufnummer an einem beliebigen Ort erreicht werden.

## Patentansprüche

1. Verfahren zur Einrichtung einer Anrufumleitung für eine SIP-Telefonnummer eines SIP Clients in einem Kommunikationsnetz,
- bei dem bei Eingabe respektive Wahl einer bestimmten Nummernfolge bzw. Kennung und der SIP-Telefonnummer an einem Telefon eines beliebigen Teilnehmeranschlusses einer dem Kommunikationsnetz zugeordneten PSTN-Vermittlungseinrichtung diese Nummerfolge in der PSTN-Vermittlungseinrichtung erkannt und derart ausgewertet wird,
- dass von der PSTN-Vermittlungseinrichtung eine erste Nachricht mit der Telefonnummer des Teilnehmeranschlusses und der eingegebenen SIP-Telefonnummer an einen Media Gateway Controller des Kommunikationsnetzes übermittelt wird und der Media Gateway Controller diese erste Nachricht derart auswertet,
- dass vom Media Gateway Controller eine zweite Nachricht mit der übermittelten Telefonnummer des Teilnehmeranschlusses und der SIP-Telefonnummer an einen SIP Registrar des Kommunikationsnetzes gesendet wird, der in einer ihm zugeordneten Location Service Datenbank die Telefonnummer als neue aktuelle Telefonnummer für Anrufe an die SIP-Telefonnummer speichert und
- dass bei Anrufen für die SIP-Telefonnummer die aktuelle Telefonnummer aus der Location Service Datenbank ermittelt wird und der Anruf zur aktuellen Telefonnummer des Teilnehmeranschlusses der PSTN-Vermittlungsstelle umgeleitet wird.

2. Verfahren nach Anspruch 1,
**dadurch gekennzeichnet,**
**dass** nach Eingabe respektive Wahl einer bestimmten Nummernfolge/Kennung und der SIP-Telefonnummer am Telefon und dessen Übermittlung zur PSTN-Vermittlungseinrichtung eine Authentifizierung des Teilnehmers durchgeführt wird.

3. Verfahren nach einem der vorhergehenden Ansprüche,
**dadurch gekennzeichnet,**
**dass** die erste Nachricht eine ISUP:IAM Nachricht ist.

4. Verfahren nach einem der vorhergehenden Ansprüche,
**dadurch gekennzeichnet,**
**dass** die zweite Nachricht eine SIP:REGISTER Nachricht ist.

5. Verfahren nach einem der vorhergehenden Ansprüche,
**dadurch gekennzeichnet,**
**dass** bei erfolgreichem Eintrag der neuen aktuellen Telefonnummer in der Location Service Datenbank vom SIP Registrar eine Bestätigung an den Media Gateway Controller gesendet wird.

6. Verfahren nach Anspruch 5,
**dadurch gekennzeichnet,**
**dass** die Bestätigung eine SIP:200 OK Nachricht ist.

7. Verfahren nach einem der vorhergehenden Ansprüche,
**dadurch gekennzeichnet,**
**dass** das Telefon mittels der Voice over DSL, Voice over Cable oder Voice over IP Trunking Technik an die PSTN-Vermittlungseinrichtung angeschlossen wird.
